# EUROPEAN PATENT SPECIFICATION

(11) **EP 0 514 766 B1**
(45) Date of publication and mention of the grant of the patent: **15.03.1995**
(21) Application number: 92108124.6
(22) Date of filing: 14.05.1992
(51) Int. Cl.: A01K 13/00, A01J 7/00, B25G 1/06

(54) **An apparatus for automatically washing teats of generic dairy animals, in particular dairy cattle, provided with means of the articulated joint type for the attachment of a handgrip**
Automatische Zitzenreinigungsvorrichtung für Milchtiere, insbesondere Milchkühe, die durch eine Gelenkverbindung mit einem Griff verbunden sind
Dispositif automatique pour laver les trayons d'animaux laitiers, en particulier des vaches laitières, pourvu d'un joint articulé pour la fixation de la poignée

(30) Priority: 20.05.1991 IT MI910427 U
(43) Date of publication of application: 25.11.1992
(73) Proprietor: GILNA CORPORATION N.V., Curaçao (AN)
(72) Inventor: Farina, Felice, I-26048 Sospiro, Cremona (IT); Federici, Renato, I-26048 Sospiro, Cremona (IT); Lucchini, Emilio, I-26048 Sospiro, Cremona (IT)
(74) Representative: Perani, Aurelio

(56) References cited:
- EP-A- 0 136 278
- EP-A- 0 399 132
- US-A- 3 571 874

## Description

This invention relates to an apparatus for automatically washing teats of generic dairy animals, specifically dairy cattle, comprising a box-type body provided with an opening for introducing a teat thereinto along a direction of introduction which is defined when applying the apparatus to the teat, and a longitudinally extending handgrip jutting out from the box-type body along an axis of attachment that is at an angle with said direction of introduction.

An apparatus of the above mentioned type is disclosed in EP-A-0 399 132.

Before milking dairy animals, in particular dairy cows, a teat washing operation is customarily performed in order to remove incrustations and spores, harmful to human health and to the quality of the milk obtained, which are oftentimes present on the animals.

This teat washing operation is carried out automatically using conventional apparatus.

The apparatus employed basically comprises a box-type body provided with an aperture for the introduction thereinto of a teat to be washed. Rotary brushes are active inside the box-type body whose bristles will work along the teat to clean it in combination with liquids being supplied into the box-type body over suitable ducts.

The brushes are kinematically connected with drive gears which are rotated by conventional drives which may be, for example, either air, electrically, or otherwise operated.

The gears and drives, or at least some of their component parts, are usually accommodated inside the box-type body.

The box-type body is also provided with a handgrip consisting of a handle which juts out of the box-type body, with which it is integrally made; in some embodiments, the handle includes pushbutton or lever controls for operating the drives or adjusting the flow of washing liquids.

In use, such apparatus would be grasped by the operator with his hand by means of the handgrip and applied to the udder of an animal so as to introduce a teat into the box-type body through the opening provided.

The rotary brushes within the box-type body will clean the teat as mentioned while the operator performs slight movements in the longitudinal direction of the teat, in order to clean it more thoroughly.

This simple teat washing operation, being repeated several times in a typical farming establishment, is an obvious cause of fatigue for the operator.

Additionally, the operator's position relative to the animal may vary considerably between different situations.

For instance, in some farms, cows are led for the washing and milking operations onto specially provided platforms, with the operator standing beside these latter.

In such cases, the operator, in order to take the apparatus close to the animal's udder, is to raise one arm and simultaneously twist his wrist downwards to incline the apparatus for having a teat passed through the provided opening.

In other farms -- notably the less up-to-date ones equipped with ordinary traditional cowsheds --during the washing and milking operations the operator is normally seated on a stool beside the animal, and in order to take the apparatus to the udder, he must lower his arm; as against the previously described situation, he is to also twist his wrist upwards to incline the apparatus to let a teat be introduced into it through the opening.

In general, the changes in the positions of the operator relative to the animal, as described above, result in different working conditions which are unfavorable to the washing process and inconvenient for the operator.

In summary, a major drawback of conventional teat washing apparatuses is that their construction cannot be adapted to suit changing conditions of use.

It is the object of this invention to provide an apparatus for automatically washings teats of dairy animals, specifically dairy cattle, with such constructional and functional characteristics as to overcome the aforementioned drawbacks with which the prior art is beset.

This object is achieved by a washing apparatus as above indicated being characterized in that it comprises a swivel joint for attaching the handgrip to the box-type body and screw means for adjusting the handgrip in a range of different angular positions with respect to the direction of introduction.

Further features and the advantages of this invention will become apparent from the following detailed description of an embodiment thereof, given by way of example and not of limitation with reference to the accompanying drawings.

In the drawings:

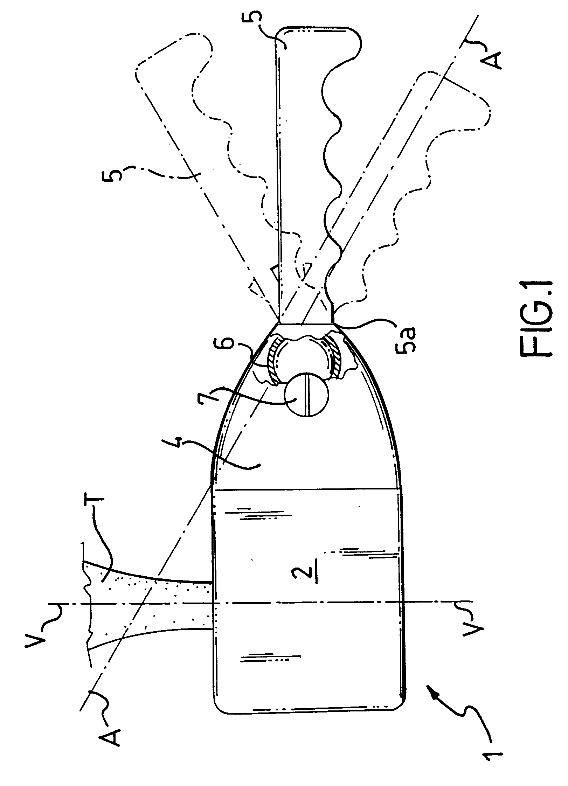

Figure 1 is a cut-away side view of an apparatus according to the invention;

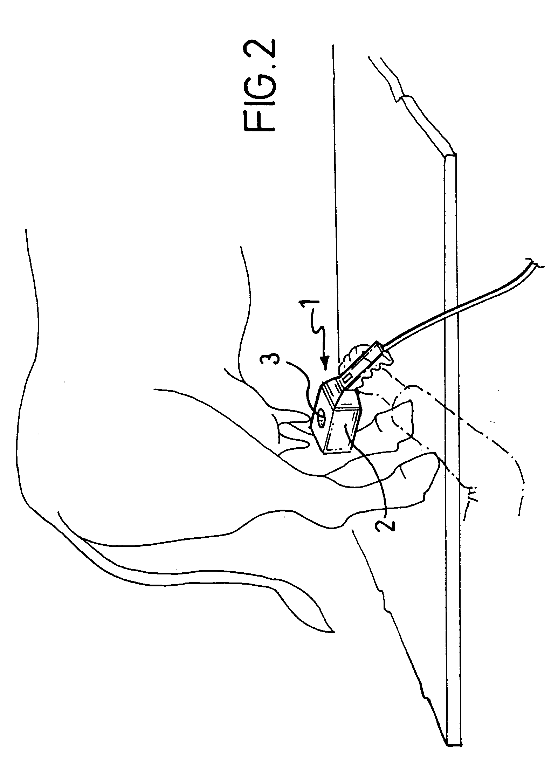

Figure 2 shows the apparatus of Figure 1 in a first condition of its operation; and

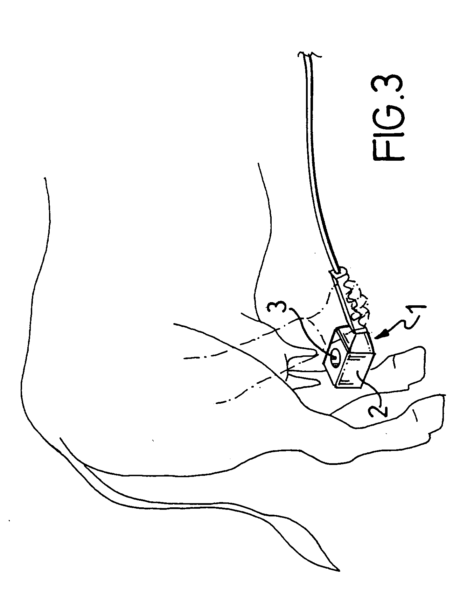

Figure 3 shows the apparatus of Figure 1 in a second condition of its operation.

With reference to the drawing figures, an apparatus 1 according to the invention is shown in operation applied to a teat T. This apparatus comprises a box-type body 2 provided with an opening 3 for introducing the teat thereinto along a direction of introduction V defined as the apparatus is applied to the teat.

Arranged within the box-type body 2 are rotary brushes and other constructional members for operating the apparatus, such as gears and ducts for washing liquids no further described herein because known per se and similar to those provided in prior art apparatus.

Provided on one end 4 of the box-type body is a handgrip 5 in the form of a handle jutting out from the box-type body. This handgrip has one end 5a engaged with a corresponding swivel joint 6 provided on the box-type body for attaching it to the box-type body.

The handgrip 5 setting can be adjusted to different angular positions, as explained hereinafter, through a screw means 7 provided on the box-type body exterior.

The angular settings for the handgrip 5 are defined by an angle included between a direction A of attachment of the handgrip to the box-type body which is defined by the longitudinal extent of the handgrip and the direction V of introduction of the teat into the box-type body or a parallel direction thereto.

The apparatus just described operates as follows.

Preliminarly to using the apparatus, the handgrip 5 setting would have to be adjusted by an operator to take a selected angular position, as by manipulation of the screw means 7.

This set position should suit the apparatus condition of use and is connected with the operator's position for teat washing, e.g. standing up or sitting down, depending on whether the animal has been placed on a raised platform or level with the operator.

The operator will then grasp the apparatus by the handgrip 5, take it to the animal's udder, and introduce a teat into the box-type body through the opening 3.

The operator can thereby wash a teat in a similar way to the above-described prior art, and thereafter proceed to repeat the operation on further teats. The positionally adjustable handgrip enables the operator to avoid special movements of the wrist in order to pass a teat into the box-type body through the purposely provided opening irrespective of the condition in which the apparatus may have to be used.

Also, the teat washing operation will be ergonomically more effective, as the apparatus can be oriented such that the direction of introduction of the teat thereinto is at all times an optimum one for a satisfactory washing action by the brushes, and without requiring any special effort of the operator to accomplish this.

## Claims

1. An apparatus (1) for automatically washing teats of generic dairy animals, specifically dairy cattle, comprising a box-type body (2) provided with an opening for introducing a teat (T) thereinto along a direction of introduction (V) which is defined when applying the apparatus to the teat, and a longitudinally extending handgrip (5) jutting out from the box-type body along an axis of attachment (A) that is at angle with said direction of introduction, characterized in that it includes a swivel joint (6) for attaching said handgrip (5) to the box-type body (2) and screw means (7) for adjusting the handgrip (5) in a range of different angular positions with respect to said direction of introduction (V).

## Patentansprüche

1. Eine Vorrichtung zum automatischen Waschen von Zitzen von milchgebenden Tieren im allgemeinen und im besonderen von Milchkühen, enthaltend einen shachtelförmigen Körper (2), der eine Öffnung zum Einführen der Zitze in sein Inneres besitzt entlang einer Richtung der Einführung (V), welche definiert wird wenn die Vorrichtung an der Zitze angebracht wird, und einen Handgriff (5), der sich der Länge nach erstreckt und aus dem schachtelförmigen Körper vorspringt entlang einer Befestigungsachse (A), die an einem Winkel mit der Richtung der Einführung ist, dadurch gekennzeichnet daß sie ein Gelenk (6) um den Handgriff (5) am schachtelförmigen Körper (2) zu befestigen und Schraubenmittel (7) um den Handgriff (5) in einem Bereich von verscheidenen Winkelstellungen bezüglich besagter Einführungsrichtung (V) einzustellen enthält.

## Revendications

1. Dispositif (1) automatique pour laver les trayons d'animaux laitiers, en particulier des vaches laitières, comprenant un corps (2) essentiellement en forme de boîte, pourvu d'une ouverture pour y introduire un trayon (T) à l'intérieur selon une direction d'introduction (V) qui est définie quand le dispositif est appliqué au trayon, et une poignée (5) qui s'étend longitudinalement en saillie du corps selon un axe (A) de fixation qui forme un angle avec ladite direction d'introduction, caractérisée en ce qu'il inclue un joint articulé (6) pour attacher ladite poignée (5) au corps (2) et des moyens filetés (7) pour régler la poignée (5) dans différentes positions angulaires par rapport à ladite direction d'introduction (V).
